# EUROPEAN PATENT SPECIFICATION

(11) **EP 2 690 197 B1**
(45) Date of publication and mention of the grant of the patent: **10.10.2018**
(21) Application number: 13169377.2
(22) Date of filing: 27.05.2013
(51) Int. Cl.: C23C 28/00, F01D 5/28

(54) **Turbine blade for industrial gas turbine and industrial gas turbine**
Turbinenschaufel für Industriegasturbine und Industriegasturbine
Aube de turbine pour turbine à gaz industrielle et turbine à gaz industrielle

(30) Priority: 30.05.2012 JP 2012122810
(43) Date of publication of application: 29.01.2014
(73) Proprietor: Mitsubishi Hitachi Power Systems, Ltd., Yokohama 220-8401 (JP); National University Corporation Hokkaido University, Sapporo-shi, Hokkaido 060-0808 (JP)
(72) Inventor: Izumi, Takeshi, Tokyo, 100-8220 (JP); Arikawa, Hideyuki, Tokyo, 100-8220 (JP); Kojima, Yoshitaka, Tokyo, 100-8220 (JP); Mebata, Akira, Tokyo, 100-8220 (JP); Kasuya, Tadashi, Tokyo, 100-8220 (JP); Narita, Toshio, Hokkaido, 060-0808 (JP)
(74) Representative: Strehl Schübel-Hopf & Partner

(56) References cited:
- EP-A1- 0 789 087
- EP-A1- 0 992 614
- EP-A1- 1 507 022
- EP-A1- 1 995 350
- EP-A2- 1 275 743
- EP-A2- 1 927 673

## Description

### TECHNICAL FIELD:

The present invention relates to a long-life turbine blade for industrial gas turbine including a blade substrate of a low-Re (low-rhenium) single crystal alloy, the blade substrate having a thermal barrier coating (TBC) thereon, and an industrial gas turbine including the turbine blade.

### BACKGROUND ART:

Recently, combustion gas temperature of a gas turbine has been increased to improve efficiency. Along with this, each of alloy members such as a turbine blade and a turbine nozzle has had the thermal barrier coating (TBC).

The TBC includes a top coat as a thermal barrier formed of an oxide having a low coefficient of thermal conductivity. Such an oxide typically includes yttria stabilized zirconia (YSZ) that contains yttria added thereto to stabilize the crystal structure thereof. The TBC also includes a bond coat for securing certain oxidation resistance and corrosion resistance, the bond coat including MCrAlY alloy (M is at least one of Ni, Co and Fe) or aluminide such as Ni-Al or Ni-Al-Pt.

The bond coat includes a thermal grown oxide (TGO) formed on a surface of the blade to protect the substrate from oxidizing and corrosive environment. Since alumina is preferred as the TGO, the bond coat generally has a high Al concentration compared with the substrate. Thus, Al may diffuse from the bond coat to the substrate during high temperature service, causing formation of a secondary reaction zone (SRZ) in the substrate which may reduce strength of the substrate.

To solve this problem, Japanese Unexamined Patent Application Publication No. 2007-186788 (Patent Document 1) discloses a diffusion barrier layer including an alloy layer containing Ru or Re which suppresses diffusion of any element between the substrate and the bond coat. Japanese Unexamined Patent Application Publication No. 2008-156697 (Patent Document 2) discloses an example of a diffusion barrier layer including an intermetallic compound containing Re, Cr and Ni.

Japanese Patent No. 3559670 (Patent Document 3) discloses a high-strength Ni-base superalloy for directional solidification having a predetermined composition which is free from occurrence of solidification cracking during casting, has grain boundary strength enough to secure reliability during service, and has excellent high-temperature
EP 1 275 743 A2 discloses a Ni-superalloy turbine blade having a four layers thermal barrier coating, which comprises a diffusion barrier layer (PtAl), a metal layer (Pt), a bond coat (NiCrAlY) and a top coat (PYSZ).

The diffusion barrier layer corresponds to an equilibrium phase in a phase diagram for a substrate-bond coat system. In other words, the diffusion barrier layer must be thermodynamically stable. The alloy layer containing Ru or Re described in Patent Document 1, however, is increasingly decomposed at high temperature through a reaction of the substrate and the bond coat, and is thus failed to maintain the above-described effects.

In contrast, the σ phase of the intermetallic compound containing Re, Cr and Ni described in Patent Document 2 is an equilibrium phase between the substrate and the bond coat, and is thus thermodynamically stable, thereby the diffusion barrier layer can maintain its function for a long time.

The industrial gas turbine (hereinafter, abbreviated as" gas turbine") is now necessary to be improved in efficiency in light of a reduction in carbon dioxide emissions. Increasing combustion gas temperature is an effective way to improve efficiency. Hence, heatproof temperature of a substrate for a turbine blade and a turbine nozzle must be increased, and a casting-solidification-controlled single-crystal material is a most promising material for the substrate.

Furthermore, some turbine blade or turbine nozzle has the thermal barrier coating (TBC) combined with high-performance cooling, which may allow the cooling air content to be reduced, and allows surplus air to be used for combustion, and thereby helps to improve efficiency. As described above, blade substrate temperature is designed to be an upper limit of the heatproof temperature of the single crystal material in this approach. As a result, temperature of the TBC bond layer also increases, which accelerates counter diffusion at an interface between the bond layer and the substrate. Consequently, a recrystallized layer due to the counter diffusion is formed in a surface of the substrate (particularly, the single crystal material), and oxidation resistance of the bond layer is reduced after long service. Hence, the diffusion barrier layer is necessary at the interface between the bond layer and the substrate.

In addition, the gas turbine blade has a unique issue, i.e., has differences from an aircraft turbine blade that often includes a single crystal blade, as described below. The heatproof temperature is designed with reference to 50,000 to 100,000 hour creep rupture strength for the gas turbine blade, while being designed with reference to a shorter period, i.e., thousands of hours creep rupture strength for the aircraft turbine blade. Furthermore, the gas turbine blade has a dimension about 10 to 20 times as large as that of the aircraft turbine blade. Based on such differences, first, a single-crystal gas turbine blade assumed to have a long life is essentially subjected to solution heat treatment and aging at accurate temperature, and is essentially not subjected to post-forming high-temperature heat treatment to prevent recrystallization of a structure maintaining certain material strength.

Hence, for example, while Patent Document 2 exemplifies formation of the barrier layer at high temperature (solution heat treatment temperature), such a process cannot be applied to the single-crystal gas turbine blade due to a possibility of recrystallization at a blade forming portion. In some exemplary case, the barrier layer is formed at a relatively low temperature (aging temperature) . In such a case, however, the barrier layer has turned out to be somewhat brittle as a result of investigations of the inventors.

Second, the gas turbine blade has a dimension about 10 to 20 times as large as that of the aircraft turbine blade. A large blade further has a significant issue, i.e., yield in a precision casting process of the blade.

Third, such a difference in blade size is also associated with a deposition process of TBC. For the large gas turbine blade, the bond-layer metal and the top-layer ceramics are each preferably deposited by thermal spray in light of cost. A physical evaporation process which allows a large number of blades to be processed in one batch is costly promising for the small aircraft turbine blade . In the thermal spray process, blast treatment is usually performed as pretreatment before thermal spray operation of the bond coat to improve adhesion of the bond coat to a substrate, in which hard particles such as alumina particles are bombarded to a surface of the substrate to roughen and clean the surface.

As known from the above results, the gas turbine blade is required to be long in life compared with the aircraft turbine blade. The gas turbine blade therefore must be a single-crystal blade having a predetermined alloy component. In addition, the barrier layer must be deposited at low temperature. The barrier layer deposited at low temperature is slightly brittle, and thus may be damaged to lose its functions by the blast treatment in the thermal spray process required for TBC operation of the large blade.

An object of the invention is to provide a long-life turbine blade for industrial gas turbine having a thermal barrier coating formed by a thermal spray process without loss of a function of a diffusion barrier layer, and provide an industrial gas turbine including the turbine blade.

### SUMMARY OF THE INVENTION:

To solve the above-described problem, a turbine blade for industrial gas turbine of the present invention is characterized by including a blade substrate formed of a single crystal alloy containing C: 0.06 to 0.08%, B: 0.016 to 0.035%, Hf: 0.2 to 0.3%, Cr: 6.9 to 7.3%, Mo: 0.7 to 1.0%, W: 7.0 to 9.0%, Re: 1.2 to 1.6%, Ta: 8.5 to 9.5%, Nb: 0.6 to 1.0%, Al: 4.9 to 5.2%, Co: 0.8 to 1.2%, and the remainder consisting of Ni with reference to mass, and including a diffusion barrier layer, a metal layer, a MCrAlY bond coat, and a top coat, in which the diffusion barrier layer, the metal layer, the bond coat and the top coat are stacked in this order on a surface of the blade substrate, and the metal layer has a thickness of 5 to 30 µm, wherein the diffusion barrier layer is made of a σ-phase intermetallic compound containing Re, Cr and Ni.

According to the present invention, a long-life turbine blade for industrial gas turbine having a thermal barrier coating formed by a thermal spray process without loss of a function of the diffusion barrier layer, and an industrial gas turbine including the turbine blade can be provided.

### BRIEF DESCRIPTION OF THE DRAWINGS:

Fig. 1 is a schematic cross-sectional diagram showing a conventional heat-resistant alloy member;
Fig. 2 is a schematic cross-sectional diagram showing a heat-resistant alloy member including a diffusion barrier layer;
Fig. 3 is a flowchart showing a method of manufacturing the heat-resistant alloy member including the diffusion barrier layer;
Fig. 4 is an SEM image of a cross-section showing a state after being subjected to a thermal spray of a heat-resistant alloy member including a diffusion barrier layer and a metal layer that is an Example;
Fig. 5 is an SEM image of a cross-section showing a state after being subjected to a thermal spray of a heat-resistant alloy member including a diffusion barrier layer that is a comparative example;
Fig. 6 is an SEM image of a cross-section showing a state after being subjected to high-temperature exposure at 1100°C for 600 hr of the heat-resistant alloy member including the diffusion barrier layer and the metal layer that is the Example;
Fig. 7 is an SEM image of a cross-section showing a state after being subjected to high-temperature exposure at 1100°C for 600 hr of a conventional heat-resistant alloy member;
Fig. 8 is a side view showing an industrial gas turbine including a turbine blade for industrial gas turbine of an Example; and
Fig. 9 is an enlarged partial cross-sectional view showing a detail of a portion A in Fig. 8.

### DETAILED DESCRIPTION OF THE PREFERRED EMBODIMENTS:

The blade material of the present invention preferably includes the high-strength Ni-base superalloy for directional solidification according to Patent Document 3 which contains grain-boundary strengthening elements such as C, B or Hf added thereto, has a large allowable crystal orientation difference of a particular crystal having an orientation different from that of the single crystal, and allows a large blade to be improved in yield in a precision casting process. In particular, a single-crystal heat-resistant alloy is practically suitable for a material composing a large single-crystal blade, the alloy containing C: 0.06 to 0.08%, B: 0.016 to 0.035%, Hf: 0.2 to 0.3%, Cr: 6.9 to 7.3%, Mo: 0.7 to 1.0%, W: 7.0 to 9.0%, Re: 1.2 to 1.6%, Ta: 8.5 to 9.5%, Nb: 0.6 to 1.0%, Al: 4.9 to 5.2%, Co: 0.8 to 1.2%, and the remainder consisting of Ni with reference to mass. In other words, the remainder consists of Ni and inevitable impurities.

In this specification, for example, "0.06% or more and 0.08% or less" may be described as "0.06 to 0.08%". The same holds true for other numerical ranges.

Hereinafter, description is made with reference to drawings.

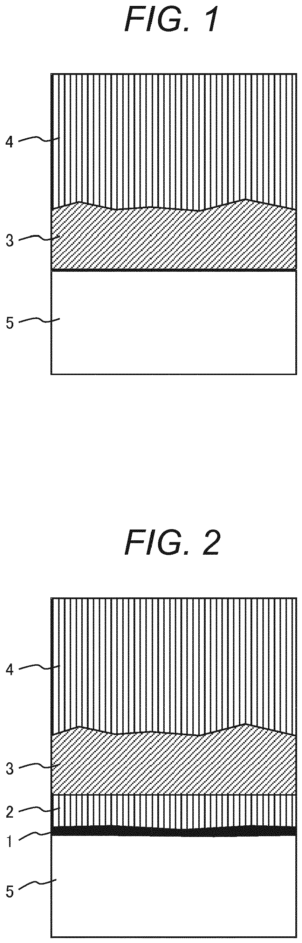

Fig. 1 shows a schematic cross-sectional diagram of a conventional heat-resistant alloy member.

The heat-resistant alloy member shown in this drawing includes a substrate 5, and includes a bond coat 3 and a top coat 4 provided in this order on a surface of the substrate 5.

The substrate 5 secures certain strength of the heat-resistant alloy member. The substrate 5 is subjected to high stress at high temperature and to repeated stress associated with start and stop. Thus, a material selected for the substrate 5 has high high-temperature creep strength and high fatigue strength.

A single-crystal alloy material having the above-described alloy composition is used for the substrate 5 for the turbine blade for industrial gas turbine.

The bond coat 3 protects the substrate 5 from corrosion and oxidation, and secures certain adhesion of the substrate 5 to the top coat 4.

MCrAlY (M is at least one metal selected from a group consisting of Ni, Co and Fe) which exhibits excellent corrosion resistance and oxidation resistance is generally used for the bond coat 3. For example, CoNiCrAlY (Co-32Ni-21Cr-8Al-0.5Y) and NiCoCrAlY (Ni-17Cr-23Co-12.5Al-0.5Y) are widely known as the MCrAlY.

The top coat 4 is disposed on the surface of the heat-resistant alloy member to serve as a thermal barrier, and causes a temperature gradient between a hot combustion gas and the substrate 5 to prevent increase in surface temperature of the substrate 5.

A material having a low coefficient of thermal conductivity is used for the top coat 4, for example, yttria stabilized zirconia (YSZ: containing Y₂O₃ in a range of 6 to 8 mass percent) . A large number of pores are provided in the inside of the top coat 4, thereby the coefficient of thermal conductivity of the top coat 4 can be decreased to about 1/10 of that of the Ni-base alloy, i.e., about 0.5 to 2 W/m·K.

A method of manufacturing the heat-resistant alloy member shown in Fig. 1 is now described.

First, a surface of the substrate 5 is subjected to blast treatment as a pretreatment. The blast treatment is a process where nonmetallic particles such as silica sand or metal particles are blasted to the substrate 5 at high speed to roughen and clean the surface of the substrate 5. In the thermal spray, the blast treatment is a step of securing certain adhesion between the substrate 5 and the bond coat 3.

After the blast treatment, the bond coat 3 for oxidation resistance and corrosion resistance is deposited by a low pressure plasma spray (LPPS) or a high velocity oxy-fuel frame-spraying (HVOF).

The thickness of the bond coat 3 is usually about 100 to 200 micrometers, though not limited to.

After the deposition of the bond coat 3, the top coat 4 as a thermal barrier is usually formed by an air plasma spray (APS) .

The top coat 4 is usually deposited to a thickness of 250 to 300 µm.

The conventional heat-resistant alloy member shown in Fig. 1 is manufactured through the above steps.

Fig. 2 is a schematic cross-sectional diagram showing a configuration of a heat-resistant alloy member including a diffusion barrier layer as an Example.

The heat-resistant alloy member shown in this drawing includes a substrate 5, and includes a diffusion barrier layer 1, a metal layer 2, a bond coat 3 and a top coat 4 provided in this order on a surface of the substrate 5.

The substrate 5, the bond coat 3 and the top coat 4 are the same as those in Fig. 1.

The diffusion barrier layer 1 is provided to prevent diffusion of atoms between the substrate 5 and the bond coat 3.

In high-temperature environment, Al largely diffuses from the bond coat 3 into the substrate 5, causing formation of a secondary reaction zone (SRZ) in the substrate 5, so that the structure of the substrate 5 varies. As a result, strength of the substrate 5 is reduced. On the other hand, elements such as Co, Mo, W, Ta, Nb, Ti, B and C diffuse into the bond coat 3 from the substrate 5, so that the composition of the bond coat 3 varies. As a result, corrosion resistance and oxidation resistance of the bond coat 3 are degraded.

The diffusion barrier layer 1 prevents diffusion of any element between the substrate 5 and the bond coat 3, thereby suppresses a reduction in strength of the substrate 5, and helps to maintain the certain corrosion resistance and oxidation resistance of the bond coat 3.

The diffusion barrier layer 1 is required to have a small diffusion coefficient. In general, metal has a diffusion coefficient that is in inverse proportion to the melting point of the metal. Hence, a metal having a high melting point is preferably selected for the diffusion barrier layer 1, namely Re. Furthermore, the diffusion barrier layer 1 is required to be stable without being decomposed at high temperature for a long time, and is thus an equilibrium phase in a phase diagram for a system of a substrate 5 and bond coat 3, namely the σ phase as the intermetallic compound containing Re, Cr and Ni.

The metal layer 2 is intended to prevent the diffusion barrier layer 1 from being broken by shock during the blast treatment.

Metals having higher toughness than the diffusion barrier layer 1 are each selected as a compositional metal of the metal layer 2. For example, the metals of the metal layer 2 are Ni, Cr, Co, Fe, Pt, Pd and Ir. Each of such metals absorbs the shock during the blast treatment through deformation of the metal itself. In particular, Ni or Co is preferred. Consequently, fracture of the brittle diffusion barrier layer 1 can be prevented, and thus the diffusion barrier layer 1 can maintain its function.

Although the metal layer 2 gradually reacts with the bond coat 3 at high temperature, the reaction does not significantly vary the composition of the bond coat 3 since Ni, Cr, Co and Fe are originally contained in the bond coat 3. Hence, the corrosion resistance and the oxidation resistance of the bond coat 3 are not adversely affected thereby. Pt, Pd and Ir are known as elements that improve corrosion resistance and oxidation resistance of any of alloys such as MCrAlY being widely used for the bond coat 3.

A method of manufacturing the heat-resistant alloy member of the invention is now described.

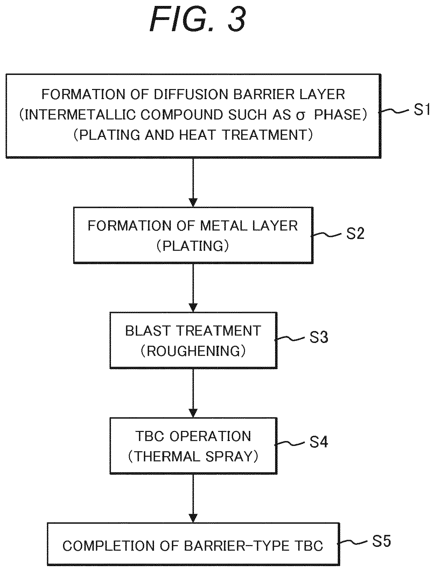

Fig. 3 is a flowchart showing the method of manufacturing the heat-resistant alloy member including the diffusion barrier layer as an Example.

The surface of the substrate 5 is subjected to pretreatment to improve adhesion of the diffusion barrier layer 1 to be provided on the surface of the substrate 5. That is, the pretreatment is removal of surface oxides and degreasing. Although the method is not limited, the surface oxides may be removed typically by blast treatment, polishing with waterproof abrasive paper, or pickling with hydrochloric acid or other acids . The degreasing is usually performed using an organic solvent such as acetone, benzene or alcohol.

After the pretreatment, the diffusion barrier layer 1 is deposited on the surface of the substrate 5 (S1). The diffusion barrier layer 1 is readily deposited by a combined process of plating and heat treatment. The process is industrially advantageous.

The plating allows thickness control on the order of micrometers. In addition, the plating readily meets a member having a complicated shape since it is a process using a liquid. Such advantages are preferred for deposition operation on the member having a complicated shape such as a turbine blade.

A layer deposited by the thermal spray has a thickness of at least several tens of micrometers. In other words, the thermal spray has a limit in control of the thickness. On the other hand, electron beam physical vapor deposition (EB-PVD) requires a sophisticated vacuum apparatus. In EB-PVD, the vacuum apparatus must be evacuated after the member is placed therein, and a long time is required for such evacuation. As a result, EB-PVD is low in operation efficiency compared with the plating requiring no special apparatus.

For example, in the case where the intermetallic compound containing Re, Cr and Ni is deposited as the diffusion barrier layer 1 by plating, a Re-Cr-Ni layer is plated in an appropriate thickness on the surface of the substrate 5, and then the plated Re-Cr-Ni layer is subjected to heat treatment to improve adhesion between the relevant layers. The heat treatment releases stress that has occurred within each layer during plating. In addition, the layers are bonded at an interface therebetween through diffusion, leading to improvement in adhesion.

Although the heat treatment is usually performed in a vacuum or an atmosphere of an inert gas such as argon or nitrogen, the heat treatment is not limited thereto, and also includes heat treatment industrially referred to as a diffusion coating.

The diffusion coating is also called "cementation" which is a general term of various types of heat treatment that allows another metal or nonmetal element to diffuse into a surface of a member, and is performed while the member is placed in a liquid or gas, or the member is buried in a solid such as metal or alloy powder. Aluminizing or chromizing is industrially widely practiced, which allows diffusion of Al or Cr, respectively, into the surface.

If the diffusion coating is performed as post-plating heat treatment, the composition of the diffusion barrier layer 1 can be appropriately adjusted. The diffusion barrier layer 1 containing Re, Cr and Ni may be formed through the chromizing after deposition of a Re-Ni layer by the plating.

After the deposition of the diffusion barrier layer 1, the metal layer 2 is deposited on the surface of the diffusion barrier layer 1 (S2). The metal layer 2 is preferably deposited by the plating due to the above-described reason, though not limited. The metal layer 2 has a thickness of 5 to 30 µm.

If the metal layer 2 has the thickness of less than 5 µm, the diffusion barrier layer 1 may be insufficiently protected from the shock by the blast. If the thickness is more than 30 µm, the bond coat may greatly vary in composition during a reaction with the metal layer 2, leading to degradation in corrosion resistance, oxidation resistance etc. of the bond coat.

After the metal layer 2 is deposited, the heat-resistant alloy member may be manufactured by the same steps as those in the method of manufacturing the conventional heat-resistant alloy member shown in Fig. 1. That is, the blast treatment (S3) and the thermal spray of the bond coat 3 and the top coat 4 (S4) are performed in order under conditions being industrially generally used, so that the heat-resistant alloy member including the diffusion barrier layer 1 is manufactured (S5).

Examples are now described.

### [Example 1]

In the gas turbine member, a single-crystal heat-resistant alloy having a composition of Ni-7Cr-1Co-0.8Mo-8.8W-1.4Re-0.8Nb-8.9Ta-5.1A1-0.25Hf-0.07C -0.02B was casted into a rod, and the rod was mechanically processed into a diameter of one inch and a thickness of 3 mm, so that the substrate 5 was prepared. The composition of the alloy was within a particularly preferable composition range of the invention.

The surface of the substrate 5 was polished with #600 SiC waterproof abrasive paper, and then the substrate 5 was ultrasonically cleaned in acetone for degreasing. The diffusion barrier layer 1 was then deposited by an electroplating.

In this Example, electrolytic Ni plating was performed to precipitate a Ni layer on the surface of the substrate 5, and then the Ni layer was washed with distilled water, and then electrolytic Re plating was successively performed to precipitate a Re layer. Then, electrolytic Ni plating layers and electrolytic Re plating layers were alternately stacked in this order, and eventually three Ni/Re layers in total were formed. Each of the deposited Ni/Re layers had a thickness of about 2 µm.

Then, the Ni/Re layer was subjected to chromizing as heat treatment. The plated substrate 5 was buried in a mixed powder of Cr and alumina while being placed in an alumina crucible. The ratio of Cr to alumina in the mixed powder was 1/3 in mass ratio. The heat treatment, however, may be performed using a mixed powder having any other mixing ratio. The alumina crucible was placed in a vacuum heater, and the atmospheric gas was then exhausted to 10⁻³ Pa, and then heating was started.

After the chromizing, the test piece was washed and degreased again, and then electrolytic Ni was deposited by 30 µm as the metal layer 2 by the plating. Then, the electrolytic Ni was subjected to the blast treatment using alumina particles having a particle size of 24 as the pretreatment before the thermal spray.

Commercially available thermal spray powder of CoNiCrAlY having a composition of Co-32Ni-21Cr-8Al-0.5Y was thermally sprayed by about 150 µm as the bond coat 3 by high velocity oxy-fuel frame-spraying (HVOF).

Commercially available yttria stabilized zirconia (YSZ) was also deposited by about 300 µm as the top coat 4 by air plasma spray (APS).

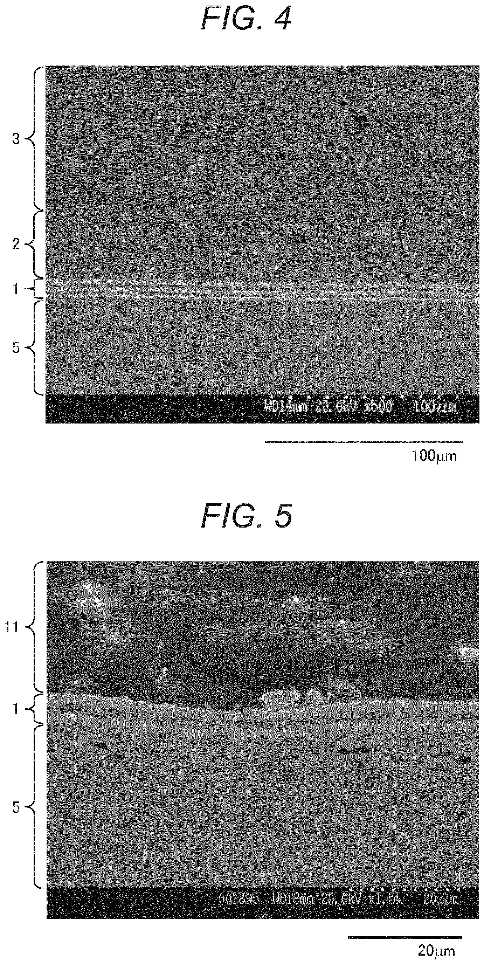

Fig. 4 shows a cross-sectional scanning microscopic photograph of a region near the diffusion barrier layer 1 and the metal layer 2 in the above-described Example.

In this drawing, the diffusion barrier layer 1, the metal layer 2, and the bond coat 3 are disposed in this order on the surface of the substrate 5.

It is observed that the Ni layer as the metal layer 2 is deformed by the blast treatment, resulting in formation of surface irregularity preferable for adhesion to the bond coat 3. On the other hand, defects such as deformation and cracks are not observed in the diffusion barrier layer 1, which reveals that the metal layer 2 absorbs the shock by the blast. The metal layer 2 effectively protects the diffusion barrier layer 1.

### (Comparative Example)

A test piece was produced as a comparative example in the following manner:
The diffusion barrier layer 1 was deposited on the surface of the substrate 5 by the same process as above, and the diffusion barrier layer 1 was then subjected to the blast treatment without providing the metal layer 2, and the bond coat 3 and the top coat 4 were then formed in order thereon by the thermal spray.

Fig. 5 shows a scanning microscopic photograph of a heat-resistant alloy member of the above-described comparative example. This test piece has a surface coated with resin 11 for observation.

As shown in this drawing, it was observed in the cross-section observation was performed after the blast treatment that the diffusion barrier layer 1 had incomplete portions over a wide area and a large number of cracks. This reveals that one of the three layers stacked as the diffusion barrier layer 1 was completely lost by the blast. The diffusion barrier layer 1 was damaged to lose its functions by the blast treatment.

To confirm the effects of the invention, each test piece was subjected to a high-temperature exposure test at 1100°C for evaluation.

A test piece having a structure without the diffusion barrier layer 1 and the metal layer 2 as shown in Fig. 1 was produced in addition to the test pieces as shown in Figs. 4 and 5. The blast treatment and the deposition of each of the bond coat 3 and the top coat 4 were performed under the same conditions as those in the Example shown in Fig. 4.

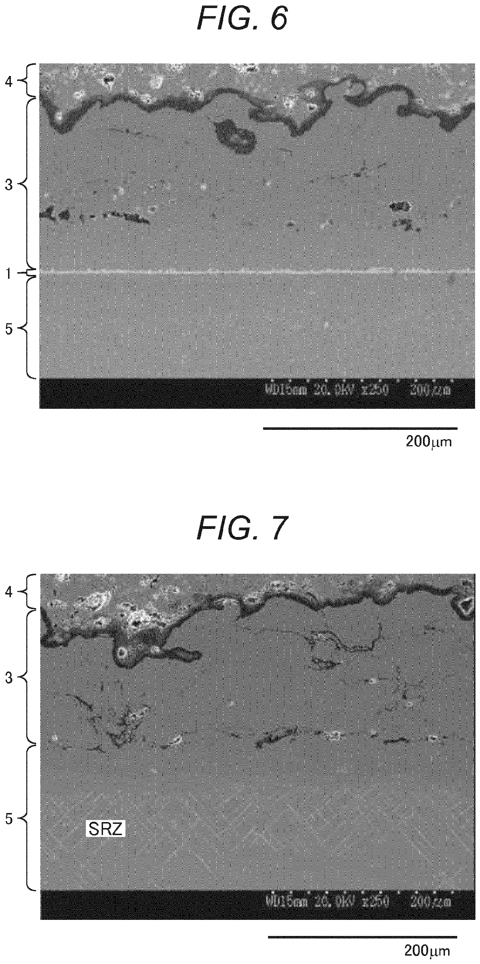

Fig. 6 shows a scanning microscopic photograph of a cross section of the test piece of the Example shown in Fig. 4 after the exposure at 1100°C for 600 hr. As seen in this drawing, the substrate 5 in the Example does not have the secondary reaction zone (SRZ) that may degrade mechanical properties of the substrate 5, revealing that the diffusion barrier layer 1 effectively suppresses diffusion of any element between the substrate 5 and the bond coat 3.

In contrast, in the case of the test piece having the conventional structure without the diffusion barrier layer 1 as shown in Fig. 7, the surface layer of the substrate 5 noticeably had SRZ, in which an acicular topologically close-packed (TCP) phase was precipitated due to counter diffusion of some element between the substrate 5 and the bond coat 3, after the exposure at 1100°C for 600 hr, thus inevitably leading to a reduction in strength of the substrate 5.

As described above, the heat-resistant alloy member of the Example as shown in Fig. 2 has the diffusion barrier layer 1 that effectively operates to suppress the counter diffusion, which resultantly prevents the formation of the SRZ. Consequently, the heat-resistant alloy member of the Example can meet the increased combustion temperature.

### [Example 2]

The same coating as that in the Example 1 was formed on a surface of a first stage turbine blade 23 formed of a single-crystal heat-resistant alloy having the same composition as that of the Example 1, the surface being to be exposed to combustion gas, so that a turbine blade for industrial gas turbine was produced.

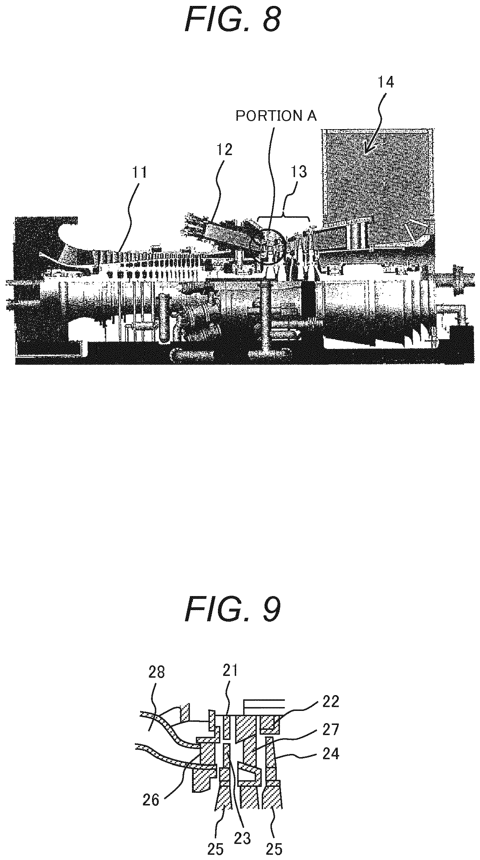

Fig. 8 shows an outline of an industrial gas turbine including the turbine blade for industrial gas turbine of the Example 1.

In this drawing, the gas turbine includes a compressor 11, a combustor 12, a turbine unit 13 (including a turbine blade and a turbine nozzle), and an exhaust outlet 14.

Fig. 9 shows a portion A in Fig. 8 in an enlarged manner, which is a cross-sectional diagram showing a detail of the turbine unit 13 including the turbine blade and the turbine nozzle.

In this drawing, the turbine unit includes a first stage shroud 21, a second stage shroud 22, a first-stage turbine blade 23, a second-stage turbine blade 24, a disc 25, a first-stage turbine nozzle 26, a second-stage turbine nozzle 27, and a combustor transition piece 28.

The industrial gas turbine of this Example had the single-crystal coating blade having excellent heat resistance, thereby enabling an increase in combustion gas temperature, and consequently a gas turbine at a level of generation efficiency of 40% was achieved.

Although the present invention has been described with the specific Examples hereinbefore, the invention is not limited thereto, and various modifications or alterations thereof may be made within the scope. The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A turbine blade for industrial gas turbine comprising:
a blade substrate formed of a single-crystal heat-resistant alloy containing
C: 0.06 to 0.08%,
B: 0.016 to 0.035%,
Hf: 0.2 to 0.3%,
Cr: 6.9 to 7.3%,
Mo: 0.7 to 1.0%,
W: 7.0 to 9.0%,
Re: 1.2 to 1.6%,
Ta: 8.5 to 9.5%,
Nb: 0.6 to 1.0%,
Al: 4.9 to 5.2%,
Co: 0.8 to 1.2%,
and the remainder consisting of Ni with reference to mass;
a diffusion barrier layer;
a metal layer made of a metal having higher toughness than the diffusion barrier layer;
a MCrAlY bond coat;
and a top coat,
wherein the diffusion barrier layer, the metal layer, the bond coat and the top coat are stacked in this order on a surface of the blade substrate, and the metal layer has a thickness of 5 to 30 µm, **characterized in that** the diffusion barrier layer is made of a σ-phase intermetallic compound containing Re, Cr and Ni.

2. An industrial gas turbine including the turbine blade according to claim 1.

3. A method of manufacturing the turbine blade according to claim 1, comprising the steps of:
forming the diffusion barrier layer on the surface of the blade substrate by plating a Re-Cr-Ni-layer on the surface of the blade substrate and subsequent heat treatment;
forming the metal layer on a surface of the diffusion barrier layer by plating;
performing a blast treatment to a surface of the metal layer; and
forming the bond coat and the top coat by a thermal spray.

## Patentansprüche

1. Turbinenschaufel für eine industrielle Gasturbine, umfassend:
ein Schaufelsubstrat, das aus einer einkristallinen,
hitzebeständigen Legierung gebildet ist, die enthält:
C: 0,06 bis 0,08%,
B: 0,016 bis 0,035%,
Hf: 0,2 bis 0,3%,
Cr: 6,9 bis 7,3%,
Mo: 0,7 bis 1,0%,
W: 7,0 bis 9,0%,
Re: 1,2 bis 1,6%,
Ta: 8,5 bis 9,5%,
Nb: 0,6 bis 1,0%,
Al: 4,9 bis 5,2%,
Co: 0,8 bis 1,2%,
und der Rest in Bezug auf die Masse aus Ni besteht;
eine Diffusionsbarriereschicht;
eine Metallschicht aus einem Metall mit höherer Zähigkeit als die Diffusionsbarriereschicht;
eine MCrAlY-Bindungsschicht;
und eine Deckschicht,
wobei die Diffusionsbarriereschicht, die Metallschicht, die Bindungsschicht und die Deckschicht in dieser Reihenfolge auf eine Oberfläche des Blattsubstrats aufgebracht sind und die Metallschicht eine Dicke von 5 bis 30 µm aufweist,
**dadurch gekennzeichnet, dass** die Diffusionsbarriereschicht aus einer intermetallischen σ-Phasen Verbindung besteht, die Re, Cr und Ni enthält.

2. Industriegasturbine mit der Turbinenschaufel nach Anspruch 1.

3. Verfahren zur Herstellung der Turbinenschaufel nach Anspruch 1, umfassend die Schritte:
Bilden der Diffusionsbarrierenschicht auf der Oberfläche des Schaufelsubstrats durch Metallisieren der Oberfläche des Schaufelsubstrats mit einer Re-Cr-Ni-Schicht und anschließender Wärmebehandlung;
Bilden der Metallschicht auf einer Oberfläche der Diffusionsbarriereschicht durch Metallisieren;
Durchführen einer Strahlbehandlung an einer Oberfläche der Metallschicht; und
Bilden der Haftschicht und der Deckschicht durch ein thermisches Sprühen.

## Revendications

1. Aube de turbine pour une turbine à gaz industrielle comprenant :
un substrat d'aube formé d'un alliage monocristallin résistant à la chaleur contenant
C : 0,06 à 0,08%,
B : 0,016 à 0,035%,
Hf : 0,2 à 0,3%,
Cr : 6,9 à 7,3%,
Mo : 0,7 à 1,0%
W : 7,0 à 9,0%,
Re : 1,2 à 1,6%,
Ta : 8,5 à 9,5%,
Nb : 0,6 à 1,0%,
Al : 4,9 à 5,2%,
Co : 0,8 à 1,2%,
et le reste consistant en Ni en référence à la masse ;
une couche barrière de diffusion ;
une couche métallique constituée d'un métal ayant une ténacité supérieure à la couche barrière de diffusion ;
un revêtement de liaison de MCrAIY ;
et un revêtement supérieur,
dans laquelle la couche barrière de diffusion, la couche métallique, le revêtement de liaison et le revêtement supérieur sont empilés dans cet ordre sur une surface du substrat d'aube, et la couche métallique a une épaisseur de 5 à 30 µm, **caractérisée en ce que** la couche barrière de diffusion est constituée d'un composé intermétallique de phase σ contenant Re, Cr et Ni.

2. Turbine à gaz industrielle incluant l'aube de turbine selon la revendication 1.

3. Procédé de fabrication de l'aube de turbine selon la revendication 1, comprenant les étapes de :
formation de la couche barrière de diffusion sur la surface du substrat d'aube par placage d'une couche de Re-Cr-Ni sur la surface du substrat d'aube et traitement thermique subséquent ;
formation de la couche métallique sur une surface de la couche barrière de diffusion par placage ;
exécution d'un traitement par sablage sur une surface de la couche métallique ; et
formation du revêtement de liaison et du revêtement supérieur par une pulvérisation thermique.
